# EUROPEAN PATENT APPLICATION

(11) **EP 4 697 156 A1**
(43) Date of publication of application: **18.02.2026**
(21) Application number: 24845735.0
(22) Date of filing: 26.04.2024
(51) Int. Cl.: G06F 3/14, B60K 35/00, H04W 4/80, G06F 3/048, G06F 9/451, B60K 35/20, B60K 35/28

(54) **ELECTRONIC DEVICE MOUNTED ON VEHICLE FOR SHARING CONTENT WITHIN VEHICLE, METHOD FOR OPERATING SAME, AND USER TERMINAL THEREFOR**

(30) Priority: 24.07.2023 KR 20230096386; 23.08.2023 KR 20230110432
(71) Applicant: Samsung Electronics Co., Ltd., Suwon-si, Gyeonggi-do 16677 (KR)
(72) Inventor: LEE, Seungjoon, Suwon-si Gyeonggi-do 16677 (KR); KIM, Hyeongseok, Suwon-si Gyeonggi-do 16677 (KR); SON, Dongil, Suwon-si Gyeonggi-do 16677 (KR); KIM, Dohyoung, Suwon-si Gyeonggi-do 16677 (KR); KIM, Suhyun, Suwon-si Gyeonggi-do 16677 (KR); LEE, Gyujin, Suwon-si Gyeonggi-do 16677 (KR)
(74) Representative: Gulde & Partner
(86) International application number: PCT/KR2024/005714
(87) International publication number: WO 2025/023431

(57) **Abstract**

The present disclosure relates to an electronic device mounted on a vehicle that shares content within the vehicle, a method for operating same, and a user terminal therefor. According to one embodiment, an electronic device mounted on a vehicle may comprise a communication module that communicates with two or more user terminals located inside the vehicle. The electronic device mounted in the vehicle may comprise a display module that displays a sharing user interface (UI) in response to a connection with the two or more user terminals. The electronic device mounted on a vehicle may comprise a processor that receives content information shared from each of the two or more user terminals through the communication module. The electronic device mounted on the vehicle may comprise a processor that synchronizes the two or more user terminals so as to display a sharing UI for displaying the content information and the information related to the vehicle at once.

## Description

### BACKGROUND

### 1. Field

The disclosure relates to a vehicle-mounted electronic device sharing content in a vehicle, a method of operating the electronic device, and a user terminal.

### 2. Description of Related Art

A vehicle-mounted electronic device (e.g., a vehicle infotainment system) may provide a driver and occupants with various information and entertainment services. The vehicle-mounted electronic device may provide, for example, driving information and music, video, calling, and navigation functions, and the like. The vehicle-mounted electronic device may interwork with a user terminal (e.g., a smartphone). The user terminal may be connected to the vehicle-mounted electronic device by wire and/or wirelessly. When connected to the user terminal, the vehicle-mounted electronic device may display content included in the user terminal. Therefore, the vehicle-mounted electronic device may allow the driver to access, easily and safely, content on the user terminal while the driver is driving.

The above description is information the inventor(s) acquired in the course of conceiving the present disclosure, or already possessed at the time, and is not necessarily art publicly known before the present application was filed.

### SUMMARY

According to an embodiment, an electronic device mounted on a vehicle may include a communication module configured to communicate with two or more user terminals present inside the vehicle. The electronic device mounted on the vehicle may include a display module configured to display a shared user interface (UI) in response to a connection to the two or more user terminals. The electronic device mounted on the vehicle may include a processor configured to receive content information from each of the two or more user terminals through the communication module. The electronic device mounted on the vehicle may include the processor configured to synchronize the two or more user terminals to display the shared UI that displays, at once, the content information and vehicle-related information about the vehicle.

According to an embodiment, a method of operating an electronic device mounted on a vehicle may include an operation of receiving content information to be shared from each of two or more user terminals through a communication module configured to communicate with the two or more user terminals present inside the vehicle. The method of operating the electronic device mounted on the vehicle may include an operation of synchronizing the two or more user terminals to display a shared UI that displays, at once, the content information and vehicle-related information about the vehicle.

According to an embodiment, a user terminal may include a communication module configured to communicate with an electronic device mounted on a vehicle. The user terminal may include a display module configured to display a shared UI in response to synchronization by the electronic device mounted on the vehicle. The user terminal may include a processor configured to generate, on a home screen, a shared page for displaying the shared UI. The user terminal may include the processor configured to control the display module to display, on the shared page, the shared UI synchronized by the electronic device mounted on the vehicle through the communication module. The shared UI may include a first screen that displays content information included in the user terminal and content information shared from another user terminal and a second screen that displays vehicle-related information about the vehicle.

According to an embodiment, a non-transitory computer-readable storage medium may include a computer program that executes an operation of receiving content information to be shared from each of two or more user terminals through a communication module configured to communicate with the two or more user terminals present inside a vehicle. The non-transitory computer-readable storage medium may include the computer program that executes an operation of synchronizing the two or more user terminals to display a shared UI that displays, at once, the content information and vehicle-related information about the vehicle.

### BRIEF DESCRIPTION OF THE DRAWINGS

The above and other aspects, features, and advantages of certain embodiments of the present disclosure will be more apparent from the following detailed description, taken in conjunction with the accompanying drawings.
FIG. 1 is a block diagram illustrating an electronic device in a network environment according to an embodiment of the present disclosure.
FIG. 2 is a diagram illustrating a connection between a vehicle-mounted electronic device and a user terminal according to an embodiment of the present disclosure.
FIG. 3 is a diagram illustrating a connection between a vehicle-mounted electronic device and two or more user terminals according to an embodiment of the present disclosure.
FIG. 4 is a flowchart illustrating an example of displaying a shared user interface (UI) according to an embodiment of the present disclosure.
FIG. 5 is a diagram illustrating an example of generating a shared page and displaying a shared UI according to an embodiment of the present disclosure.
FIG. 6 is a diagram illustrating a shared UI displayed on a vehicle-mounted electronic device according to an embodiment of the present disclosure.
FIGS. 7, 8, and 9 are diagrams illustrating a method of displaying content data according to an embodiment of the present disclosure.
FIG. 10 is a diagram illustrating a method of adding content information according to an embodiment of the present disclosure.
FIGS. 11 and 12 are diagrams illustrating information displayed on a shared UI according to an embodiment of the present disclosure.
FIG. 13 is a diagram illustrating an example of controlling content according to an embodiment of the present disclosure.
FIG. 14 is a diagram illustrating an example of displaying content information according to an embodiment of the present disclosure.
FIG. 15 is a diagram illustrating an example of sharing the same content information according to an embodiment of the present disclosure.
FIG. 16 is a diagram illustrating a theme for a shared UI according to an embodiment of the present disclosure.
FIG. 17 is a diagram illustrating an example of displaying two or more pieces of navigation information according to an embodiment of the present disclosure.
FIG. 18 is a flowchart illustrating a method of operating a vehicle-mounted electronic device according to an embodiment of the present disclosure.

### DETAILED DESCRIPTION

Hereinafter, various embodiments will be described in greater detail with reference to the accompanying drawings. When describing the embodiments with reference to the accompanying drawings, like reference numerals refer to like elements and a repeated description related thereto will be omitted.

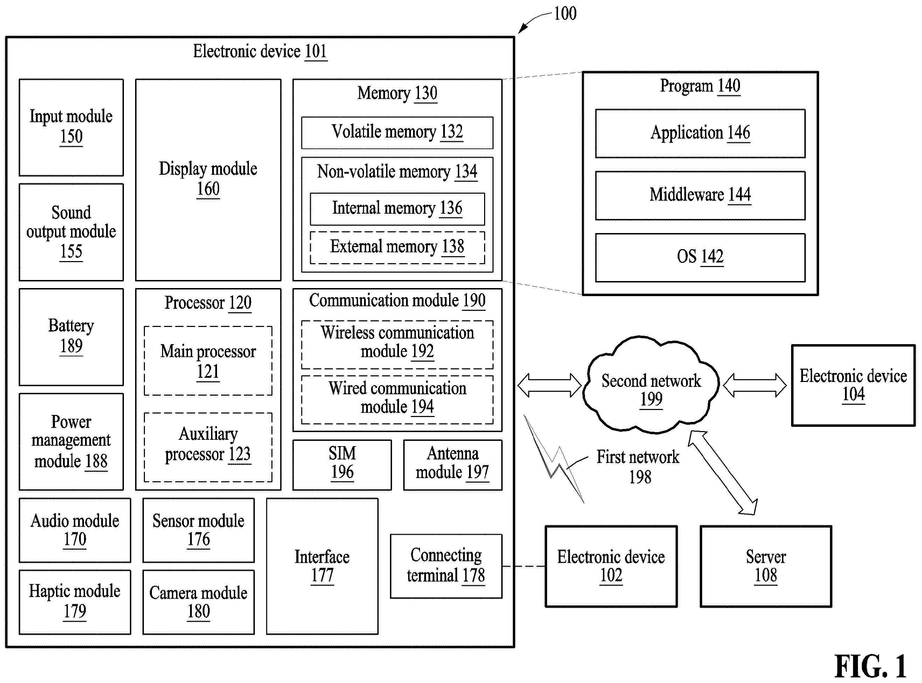

FIG. 1 is a block diagram illustrating an electronic device 101 in a network environment 100 according to an embodiment of the present disclosure. Referring to FIG. 1, the electronic device 101 in the network environment 100 may communicate with an external electronic device 102 via a first network 198 (e.g., a short-range wireless communication network), or communicate with at least one of an external electronic device 104 and a server 108 via a second network 199 (e.g., a long-range wireless communication network). According to an embodiment, the electronic device 101 may communicate with the external electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added in the electronic device 101. In various embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101 in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing records. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., the external electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with an external electronic device (e.g., the external electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the external electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and an external electronic device (e.g., the external electronic device 102, the external electronic device 104, or the server 108) and performing communication via the established communication channel. The communication module 190 may include one or more communication processors that are operable independently of the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as, Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., an LAN or a wide area network (WAN))). These various types of communication modules may be implemented as a single component (e.g., a single chip), or may be implemented as multiple components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4th generation (4G) network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., an mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form an mmWave antenna module. According to an embodiment, the mmWave antenna module may include a PCB, an RFIC disposed on a first surface (e.g., a bottom surface) of the PCB or adjacent to the first surface and capable of supporting a designated high-frequency band (e.g., the mmWave band), and a plurality of antennas (e.g., array antennas) disposed on a second surface (e.g., a top or a side surface) of the PCB or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more of the external electronic devices 102 and 104, and the server 108. For example, if the electronic device 101 needs to perform a function or a service automatically, or in response to a request from a user or another device, the electronic device 101, instead of, or in addition to, executing the function or the service, may request one or more external electronic devices to perform at least a part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least a part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to various embodiments, an electronic device may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the foregoing examples.

It should be appreciated that various embodiments of the disclosure and the terms used therein are not intended to limit the technological features set forth herein to particular example embodiments and include various changes, equivalents, or replacements for a corresponding embodiment. In connection with the description of the drawings, like reference numerals may be used for similar or related components. As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof. Terms such as "first" "second," or "1st" or "2nd" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

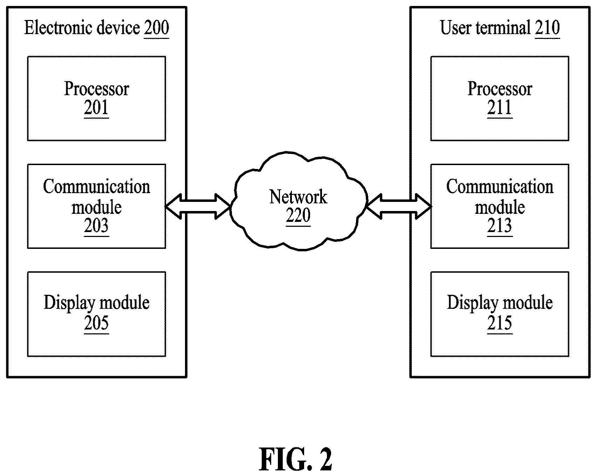

FIG. 2 is a diagram illustrating a connection between an electronic device and a user terminal according to an embodiment of the present disclosure.

Referring to FIG. 2, an electronic device 200 (e.g., the electronic device 101 in FIG. 1) and a user terminal 210 (e.g., the electronic device 102 in FIG. 1) are shown. The electronic device 200 may include a vehicle-mounted electronic device (e.g., a vehicle infotainment system) that is provided in or mounted on a vehicle. The user terminal 210 may be a terminal of an occupant on board the vehicle. The user terminal 210 may include various computing devices such as a mobile phone, a smartphone, a tablet, an e-book device, and a laptop, and various wearable devices such as a smart watch, smart glasses, and a head-mounted display (HMD). For ease of description, a smartphone will be described herein as an example of the user terminal 210. However, it will be apparent to those skilled in the art that the following description of the user terminal 210 may apply to various devices described above. The electronic device 200 and the user terminal 210 shown in FIG. 2 show only components relevant to the embodiments of the present disclosure. Accordingly, it will be apparent to those skilled in the art that the electronic device 200 and the user terminal 210 may include other general-purpose components in addition to those shown in FIG. 2.

The electronic device 200 may include a processor 201 (e.g., the processor 120 in FIG. 1), a communication module 203 (e.g., the communication module 190 in FIG. 1), and a display module 205 (e.g., the display module 160 in FIG. 1). The user terminal 210 may include a processor 211, a communication module 213, and a display module 215.

The electronic device 200 may communicate, by wire and/or wirelessly, with the user terminal 210 via the communication module 203. The user terminal 210 may communicate, by wire and/or wirelessly, with the electronic device 200 via the communication module 213. The electronic device 200 and the user terminal 210 may communicate with each other via a network 220 (e.g., the first network 198 in FIG. 1). The electronic device 200 may communicate with peripheral devices of the vehicle. For example, the electronic device 200 may communicate with peripheral devices of the vehicle through the communication module 203. The electronic device 200 may receive information related to the vehicle from peripheral devices of the vehicle. The electronic device 200 may control the display module 205 to display information related to the vehicle.

The processor 201 may identify whether the electronic device 200 is connected to the user terminal 210. When the electronic device 200 is connected to the user terminal 210, the electronic device 200 may receive content information from the user terminal 210. When the user terminal 210 is connected to the electronic device 200, the user terminal 210 may transmit the content information to the electronic device 200. The content information may include preset application information to be shared from the user terminal 210 with other user terminals.

The processor 201 may generate a shared user interface (UI) based on the content information received from the user terminal 210. The processor 201 may generate the shared UI that includes a first screen displaying the content information received from the user terminal 210 and a second screen displaying vehicle-related information. On the shared UI, the first screen and the second screen may be arranged in an up/down direction and/or left/right direction.

The processor 201 may cause user terminals to display the shared UI. In a case in which there are two or more user terminals, the processor 201 may synchronize the two or more user terminals to display the shared UI.

The display module 205 of the electronic device 200 may display the shared UI in response to a connection to the user terminal 210. The display module 215 of the user terminal 210 may display the shared UI in response to synchronization by the electronic device 200.

The synchronization may be performed such that the shared UI displayed by the display module 205 of the electronic device 200 and the shared UI displayed by the user terminal 210 display the same information. The first screen of the shared UI displayed by the display module 205 and the first screen of the shared UI displayed by the display module 215 may display the same content information. However, the second screen of the shared UI displayed by the display module 205 and the second screen of the shared UI displayed by the display module 215 may display the same or different information. For example, the second screen of the shared UI displayed by the display module 205 and the second screen of the shared UI displayed by the display module 215 may both display the same navigation information. In a case in which the second screen of the shared UI displayed by the display module 205 and the second screen of the shared UI displayed by the display module 215 include control information for peripheral devices mounted on the vehicle, the display module 205 may display control information for all the peripheral devices mounted on the vehicle, while the display module 215 may display control information for peripheral devices related to an identified location of the user terminal 210 including the display module 215 in the vehicle.

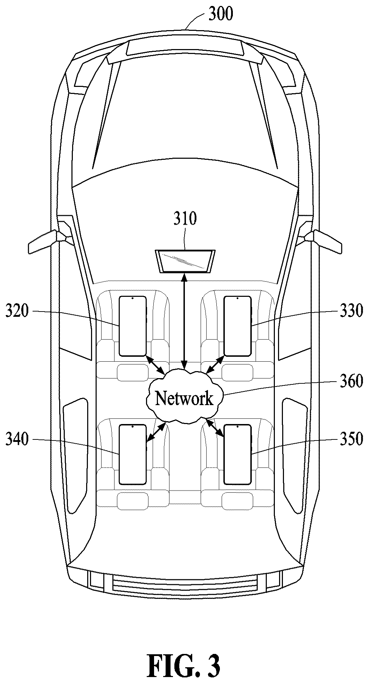

It will be apparent to those skilled in the art that the foregoing description of the user terminal 210 may apply to each user terminal described herein. For example, the foregoing description of the user terminal 210 may apply to two or more user terminals 320, 330, 340, and 350 shown in FIG. 3. It will also be apparent to those skilled in the art that the description of each user terminal may apply to other user terminals. For example, the description of a first user terminal may apply to second through fourth user terminals. The description of the second user terminal may apply to the first user terminal, the third user terminal, and the fourth user terminal. Hereinafter, a connection between a vehicle-mounted electronic device (e.g., the electronic device 200) and two or more user terminals mounted on a vehicle will be described.

FIG. 3 is a diagram illustrating a connection between a vehicle-mounted electronic device and two or more user terminals according to an embodiment of the present disclosure.

Referring to FIG. 3, a vehicle 300 is shown. The vehicle 300 may include an electronic device (not shown) (e.g., the electronic device 101 in FIG. 1 and the electronic device 200 in FIG. 2). The electronic device may include a display module 310 (e.g., the display module 160 in FIG. 1 and the display module 205 in FIG. 2). In the vehicle 300, there may be two or more user terminals 320, 330, 340, and 350. The two or more user terminals 320, 330, 340, and 350 may belong to different occupants. For example, the first user terminal 320 (e.g., the electronic device 102 in FIG. 1 and the user terminal 210 in FIG. 2) may be a terminal of a driver of the vehicle 300. The second user terminal 330 (e.g., the electronic device 102 in FIG. 1 and the user terminal 210 in FIG. 2) may be a terminal of an occupant seated in a passenger seat. The third user terminal 340 (e.g., the electronic device 102 in FIG. 1 and the user terminal 210 in FIG. 2) and the fourth user terminal 350 (e.g., the electronic device 102 in FIG. 1 and the user terminal 210 in FIG. 2) may be terminals of occupants seated in the back seat. However, this is provided only as an example, and one occupant may have two or more user terminals.

The electronic device may communicate with the two or more user terminals 320, 330, 340, and 350 over a network 360 (e.g., the first network 198 in FIG. 1 and the network 220 in FIG. 2). The electronic device may establish a communication connection with two or more user terminals via a communication module (e.g., the communication module 190 in FIG. 1 and the communication module 203 in FIG. 2). When the electronic device mounted on the vehicle 300 is connected to the two or more user terminals 320, 330, 340, and 350, the electronic device may receive content information shared by (or from) the two or more user terminals 320, 330, 340, and 350. The content information shared from each of the two or more user terminals 320, 330, 340, and 350 may include information about application information present on each of the two or more user terminals 320, 330, 340, and 350 to be shared within the vehicle 300.

The electronic device may generate a shared UI that displays the content information received from the two or more user terminals 320, 330, 340, and 350 and vehicle-related information about the vehicle 300 at the same time. The display module 310 of the electronic device may display the shared UI. The electronic device may synchronize the two or more user terminals 320, 330, 340, and 350 to display the shared UI. The two or more user terminals 320, 330, 340, and 350 may display the shared UI through the synchronization. The two or more user terminals 320, 330, 340, and 350 may display the shared UI on a shared page generated in response to the connection to the electronic device. Respective first screens displayed by the two or more user terminals 320, 330, 340, and 350 may display the same content information. Respective second screens displayed by the two or more user terminals 320, 330, 340, and 350 may display the same or different vehicle-related information. For example, the second screens displayed by the two or more user terminals 320, 330, 340, and 350 may differ based on the locations of the two or more user terminals 320, 330, 340, and 350 within the vehicle 300.

Hereinafter, a connection between an electronic device and two or more user terminals (e.g., 320, 330, 340, and 350) will be described with reference to flowcharts.

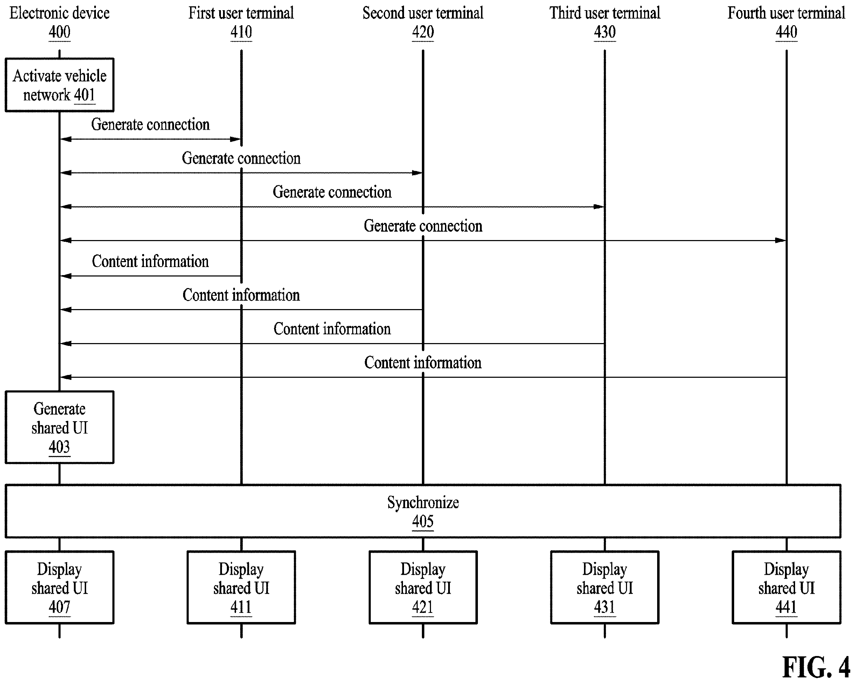

FIG. 4 is a flowchart illustrating an example of displaying a shared UI according to an embodiment of the present disclosure.

Hereinafter, operations to be described with reference to embodiments may be performed in sequential order but are not necessarily performed in sequential order. For example, the order of the operations may be changed, and at least two of the operations may be performed in parallel. The operations to be described with reference to FIG. 4 may be performed by at least one component of an electronic device 400 (e.g., the electronic device 101 in FIG. 1 and the electronic device 200 in FIG. 2).

In operation 401, the electronic device 400 may activate a vehicle network (e.g., the first network 198 in FIG. 1, the network 220 in FIG. 2, and the network 360 in FIG. 3). The electronic device 400 may be connected, via the vehicle network, to a first user terminal 410 (e.g., the electronic device 102 in FIG. 1, the user terminal 210 in FIG. 2, and the first user terminal 320 in FIG. 3), a second user terminal 420 (e.g., the electronic device 102 in FIG. 1, the user terminal 210 in FIG. 2, and the second user terminal 330 in FIG. 3), a third user terminal 430 (e.g., the electronic device 102 in FIG. 1, the user terminal 210 in FIG. 2, and the third user terminal 340 in FIG. 3), and a fourth user terminal 440 (e.g., the electronic device 102 in FIG. 1, the user terminal 210 in FIG. 2, and the fourth user terminal 350 in FIG. 3). The electronic device 400 may establish a communication connection with two or more user terminals via a communication module.

When the electronic device 400 is connected to a plurality of user terminals (e.g., 410, 420, 430, and 440) over the network, the electronic device 400 may receive content information from each of the user terminals 410, 420, 430, and 440. The electronic device 400 may receive content information from each of the plurality of user terminals 410, 420, 430, and 440 to be shared within a vehicle (e.g., the vehicle 300 in FIG. 3).

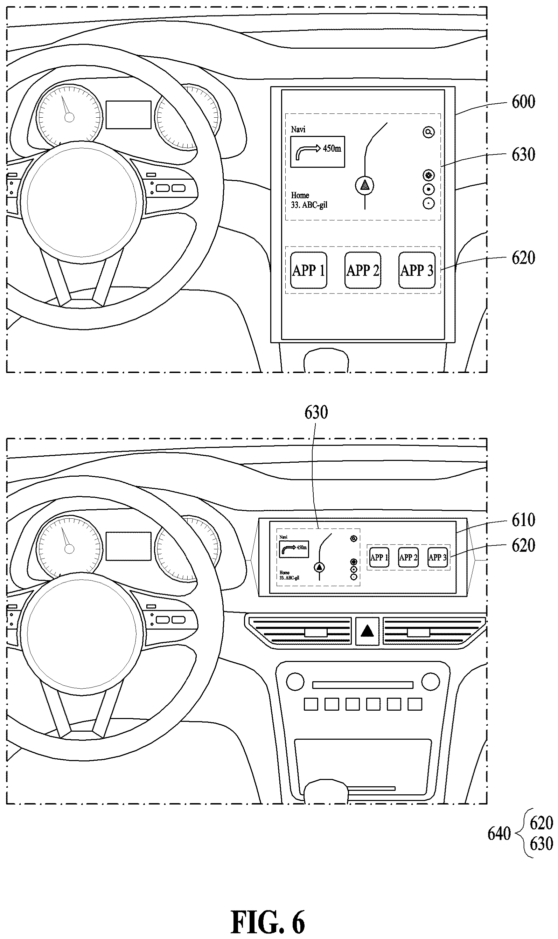

In operation 403, the electronic device 400 may generate a shared UI. The electronic device 400 may generate the shared UI based on the content information received from the plurality of user terminals 410, 420, 430, and 440 and vehicle-related information. The shared UI may include a first screen including the content information received from the plurality of user terminals 410, 420, 430, and 440 and a second screen including the vehicle-related information. In response to the shared UI being generated by the electronic device 400, each of the plurality of user terminals 410, 420, 430, and 440 may generate a shared page for displaying the shared UI. The generation of a shared page will be further described below with reference to FIG. 6.

In operation 405, the electronic device 400 may synchronize the plurality of user terminals 410, 420, 430, and 440 to display the shared UI. The electronic device 400 may transmit the received content information to each of the plurality of user terminals 410, 420, 430, and 440 such that they display the shared UI. The electronic device 400 may transmit the vehicle-related information to each of the plurality of user terminals 410, 420, 430, and 440 such that they display the shared UI.

In operation 407, the electronic device 400 may control a display module (e.g., the display module 160 in FIG. 1, the display module 205 in FIG. 2, and the display module 310 in FIG. 3) to display the shared UI. The electronic device 400 may display, on the display module, a first screen including the content information received from the plurality of user terminals 410, 420, 430, and 440, and a second screen including the vehicle-related information.

In operation 411, the first user terminal 410 may display the shared UI on a display module (e.g., the display module 215 in FIG. 2). The first user terminal 410 may display the first screen including the content information shared from the plurality of user terminals 410, 420, 430, and 440, and the second screen including the vehicle-related information.

In operation 421, the second user terminal 420 may display the shared UI on a display module (e.g., the display module 215 in FIG. 2). The second user terminal 420 may display the first screen including the content information shared from the plurality of user terminals 410, 420, 430, and 440, and the second screen including the vehicle-related information.

In operation 431, the third user terminal 430 may display the shared UI on a display module (e.g., the display module 215 in FIG. 2). The third user terminal 430 may display the first screen including the content information shared from the plurality of user terminals 410, 420, 430, and 440, and the second screen including the vehicle-related information.

In operation 441, the fourth user terminal 440 may display the shared UI on a display module (e.g., the display module 215 in FIG. 2). The fourth user terminal 440 may display the first screen including the content information shared from the plurality of user terminals 410, 420, 430, and 440, and the second screen including the vehicle-related information.

Hereinafter, displaying a shared UI on a shared page of a user terminal will be described.

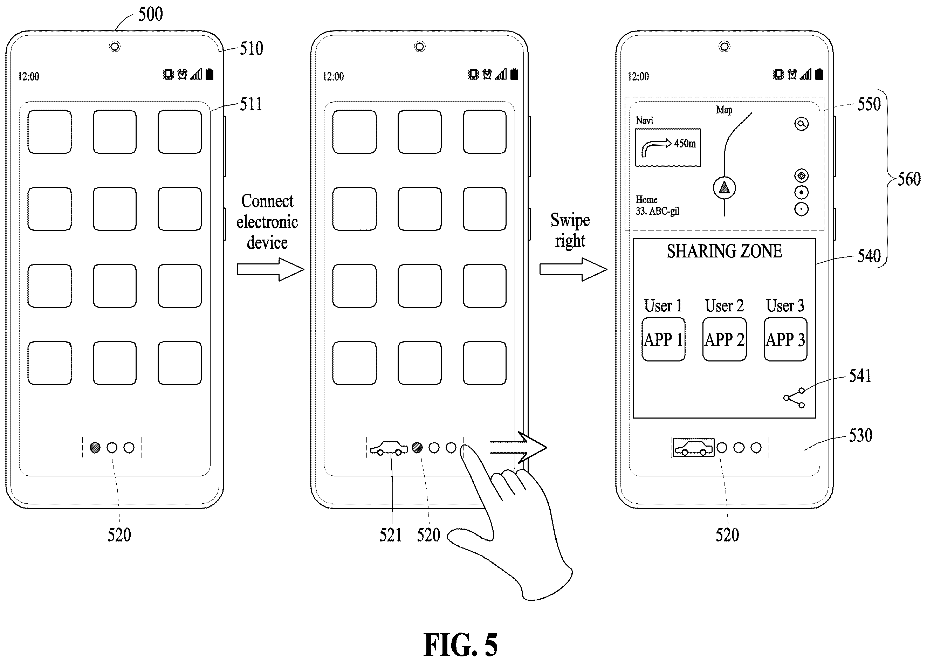

FIG. 5 is a diagram illustrating an example of generating a shared page and displaying a shared UI according to an embodiment of the present disclosure.

Referring to FIG. 5, shown is a user terminal 500 (e.g., the electronic device 102 in FIG. 1, the user terminal 210 in FIG. 2, the first to fourth user terminals 320 to 350 in FIG. 3, and the first to fourth user terminals 410 to 440 in FIG. 4) that is displaying a home screen 511 on a display module 510 (e.g., the display module 215 in FIG. 2).

The home screen 511, which is a main screen of the user terminal 500, may be displayed first when the user terminal 500 is booted. The home screen 511 may display a plurality of application icons. The home screen 511 may include a plurality of pages through which a user may navigate them by swiping left and right. The home screen 511 may include an indicator 520 at a bottom end thereof which are simplified indication of the plurality of pages. The number of points included in the indicator 520 may correspond to the number of the plurality of pages. The home screen 511 shown in FIG. 5 is provided only as an example, and it will be apparent to those skilled in the art that the home screen 511 may include widgets and picture-in-picture (PIP) in addition to the plurality of application icons.

When the user terminal 500 is connected to an electronic device (e.g., the electronic device 101 in FIG. 1, the electronic device 200 in FIG. 2, and the electronic device 400 in FIG. 4) mounted on a vehicle (e.g., the vehicle 300 in FIG. 3) via a network, the user terminal 500 may generate a shared page 530 for displaying a shared UI 560. According to an embodiment, a shared page may be generated as a leftmost page of a home screen. When the shared page 530 is generated, the indicator 520 may further display an icon 521 indicating that the shared page 530 has been generated.

The user may swipe a screen of the user terminal 500 left and right for the user terminal 500 to display the shared page 530 on the display module 510. For example, when the user terminal 500 is currently displaying an immediately right page of the shared page 530, the user may swipe the screen rightward to display the shared page 530 that is generated on a left side of the currently displayed page.

When the shared page 530 is displayed on the display module 510, the icon 521 indicating that the shared page 530 has been generated may indicate that the shared page 530 is currently being displayed on the display module 510. For example, a rectangle including the icon 521 may be displayed.

The shared page 530 may include the shared UI 560. The shared UI 560 may include a first screen 540 that displays content information shared by other user terminals in addition to the user terminal 500. The content information may include information about applications present on each of the user terminals to be shared within the vehicle.

For example, in a case in which the user terminal 500 is a first user terminal, the first screen 540 may display content information shared by a second user terminal and a third user terminal in addition to content information shared by the first user terminal. For example, as shown in FIG. 5, APP 1 may be content information shared from the first user terminal, APP 2 may be content information shared from the second user terminal, and APP 3 may be content information shared from the third user terminal.

The shared UI 560 may include a second screen 550 that displays vehicle-related information received from the vehicle. The vehicle-related information may include navigation information executed by the electronic device mounted on the vehicle. The vehicle-related information on the second screen 550 may include driving information of the vehicle. The vehicle-related information may include control information for peripheral devices mounted on the vehicle. For example, the second screen 550 may display the navigation information received from the vehicle. According to an embodiment, the user may change information being displayed on the second screen 550 by a preset input. For example, the preset input may be a gesture touching an area in the second screen 550 and a gesture touching a separate change button displayed on the second screen 550.

The shared UI 560 may display the first screen 540 and the second screen 550 at once. The first screen 540 may include an icon 541 for selecting whether content selected by the user from the first screen 540 is to be played on the user terminal 500 or the electronic device mounted on the vehicle.

Hereinafter, an electronic device mounted on a vehicle, also referred to herein as a vehicle-mounted electronic device, which displays a shared UI (e.g., the shared UI 560) will be described.

FIG. 6 is a diagram illustrating a shared UI displayed on a vehicle-mounted electronic device according to an embodiment of the present disclosure.

Referring to FIG. 6, shown are display modules 600 and 610 (e.g., the display module 160 in FIG. 1, the display module 205 in FIG. 2, and the display module 310 in FIG. 3) of a vehicle-mounted electronic device (e.g., the electronic device 101 in FIG. 1, the electronic device 200 in FIG. 2, and the electronic device 400 in FIG. 4) that is mounted on a vehicle.

Here, screens that display the same information in a shared UI 640 (e.g., the shared UI 560 in FIG. 5) will be referred to as the same name, regardless of which device displays them. For example, a screen that displays vehicle-related information may be referred to herein as a second screen 630 (e.g., the second screen 550 in FIG. 5), regardless of which device displays it. For example, a screen that displays content information shared from user terminals may be referred to herein as a first screen 620 (e.g., the first screen 540 in FIG. 5), regardless of which device displays it. Accordingly, it will be apparent to those skilled in the art that the description of the shared UI 640 displayed on the electronic device may also apply to a shared UI displayed by a user terminal (e.g., the electronic device 102 in FIG. 1, the user terminal 210 in FIG. 2, the first to fourth user terminals 320 to 350 in FIG. 3, and the first to fourth user terminals 410 to 440 in FIG. 4). It will also be apparent to those skilled in the art that the description of the shared UI displayed on the user terminal may also apply to the shared UI 640 displayed on the electronic device.

In one embodiment, the electronic device may control the display modules 600 and 610 to display the shared UI 640. The display module 600 may have a vertically elongated shape. The display module 600 may display the first screen 620 and the second screen 630 included in the shared UI 640 in a vertical direction or up/down direction. In another embodiment, the display module 610 may have a horizontally elongated shape. On the display module 610, the first screen 620 and the second screen 630 included in the shared UI 640 may be arranged in a horizontal direction or left/right direction.

The electronic device may be synchronized with a user terminal to display the same information therewith. For example, the first screen 620 may display content information received from user terminals, and the user terminals may display the same information as the content information being displayed on the first screen 620. For example, the second screen 630 may display navigation information executed by the electronic device, and the user terminals may also display the navigation information being displayed on the second screen 630. However, a user may control a user terminal to display other information that is not the navigation information through a preset input.

Hereinafter, a method of displaying content data will be described.

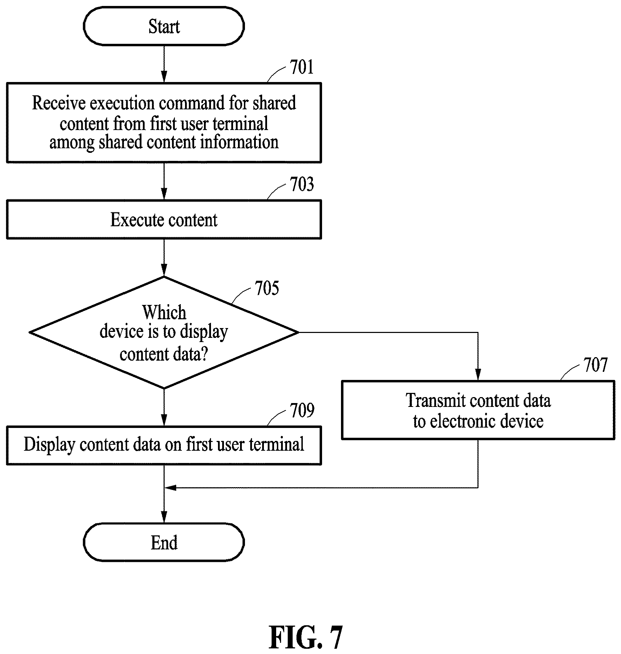

FIGS. 7 through 9 are diagrams illustrating a method of displaying content data according to an embodiment of the present disclosure.

Referring to FIG. 7, a flowchart is shown to describe a method of displaying content data according to an embodiment of the present disclosure.

The method of displaying content data will be described using, as an example, a first user terminal (e.g., the electronic device 102 in FIG. 1, the user terminal 210 in FIG. 2, the first user terminal 320 in FIG. 3, the first user terminal 410 in FIG. 4, and the user terminal 500 in FIG. 5). However, it will be apparent to those skilled in the art that the following description may apply to other user terminals.

Hereinafter, operations to be described with reference to embodiments may be performed in sequential order but are not necessarily performed in sequential order. For example, the order of the operations may be changed, and at least two of the operations may be performed in parallel.

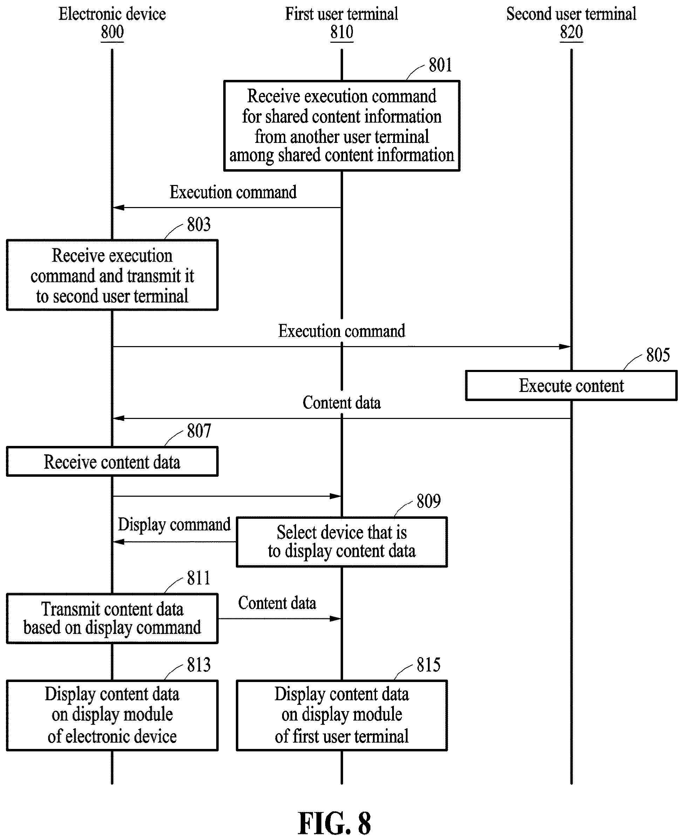

In operation 701, the first user terminal may receive an execution command for content shared from the first user terminal among shared content information. A user may select content information shared by the first user terminal from a first screen (e.g., the first screen 540 in FIG. 5 and the first screen 620 in FIG. 6) of a shared UI (e.g., the shared UI 560 in FIG. 5 and the shared UI 640 in FIG. 6) being displayed on a display module (e.g., the display module 215 in FIG. 2 and the display module 510 in FIG. 5) of the first user terminal. An example case in which the user selects content information shared by another user terminal from the first screen will be described below with reference to FIG. 8.

In operation 703, the first user terminal may execute the content corresponding to the content information selected by the user. The first user terminal may receive, from the user, a display command indicating which device is to display content data, which is data (e.g., screen data, etc.) of the content being executed by the first user terminal. For example, when the content being executed by the first user terminal is a video play application, the content data may be data related to a video being played. For example, when the content being executed by the first user terminal is a music play application, the content data may be data related to a song being played.

In operation 705, the first user terminal may determine which device is to display the content data based on the display command.

In operation 707, when the display command is a command to display the content data on an electronic device (e.g., the electronic device 101 in FIG. 1, the electronic device 200 in FIG. 2, and the electronic device 400 in FIG. 4), the first user terminal may transmit the content data to the electronic device. Upon receiving the content data, the electronic device may display the content data on a first screen (e.g., the first screen 540 in FIG. 5 and the first screen 620 in FIG. 6) displayed by a display module (e.g., the display module 160 in FIG. 1, the display module 205 in FIG. 2, the display module 310 in FIG. 3, and the display modules 600 and 610 in FIG. 6).

In operation 709, when the display command is a command to display the content data on the first user terminal, the first user terminal may display the content data on the first screen displayed by the display module of the first user terminal.

According to an embodiment, the display command may be a command to display the content data on both the first user terminal and the electronic device. The first user terminal may transmit the content data to the electronic device. The electronic device receiving the content data and the first user terminal may display the content data on the first screen displayed by their respective display modules.

Referring to FIG. 8, displaying content data when a user selects content information shared from another user terminal will be described below.

Hereinafter, it will be assumed that the user is a user of a first user terminal 810 (e.g., the electronic device 102 in FIG. 1, the user terminal 210 in FIG. 2, the first user terminal 320 in FIG. 3, the first user terminal 410 in FIG. 4, and the user terminal 500 in FIG. 5), and the other user terminal is a second user terminal 820 (e.g., the electronic device 102 in FIG. 1, the user terminal 210 in FIG. 2, the second user terminal 330 in FIG. 3, and the second user terminal 420 in FIG. 4). However, it will be apparent to those skilled in the art that this is provided only as an example, and that the present disclosure is not limited to the following description.

Hereinafter, operations to be described with reference to embodiments may be performed in sequential order but are not necessarily performed in sequential order. For example, the order of the operations may be changed, and at least two of the operations may be performed in parallel.

In operation 801, the first user terminal 810 may receive, from the user, an execution command for content information shared from another user terminal among shared content information. Unlike the embodiments described above with reference to FIG. 7, the first user terminal 810 may not execute content because it has received the execution command for the content information shared from the other user terminal. Therefore, the first user terminal 810 may transmit the execution command to an electronic device 800 (e.g., the electronic device 101 in FIG. 1, the electronic device 200 in FIG. 2, and the electronic device 400 in FIG. 4).

In operation 803, the electronic device 800 may receive the execution command from the first user terminal 810 and transmit the received execution command to the other user terminal. The electronic device 800 may transmit the execution command to the user terminal that has shared the content information related to the execution command. For example, when the execution command is a command to execute content shared by the second user terminal 820, the electronic device 800 may transmit the execution command to the second user terminal 820.

In operation 805, the second user terminal 820 may receive the execution command and execute the content corresponding to the execution command. For example, the second user terminal 820 may receive an execution command to execute a video play application and may then execute the video play application corresponding to the execution command. The content to be executed by the second user terminal 820 may be stored in the second user terminal 820 or received from a service provider that provides the content. According to an embodiment, the second user terminal 820 may execute the content in the background in response to the received execution command. According to an embodiment, the second user terminal 820 may transmit a link address that enables the execution of the content, instead of the content data. In this case, the second user terminal 820 may not execute the content. In this case, other user terminals receiving the link address that enables the execution of the content may each execute the content through the link address.

The link address that enables the execution of the content may be a link address provided by the provider of the content. According to an embodiment, the other user terminals may not be able to execute the content through the received link address. For example, the other user terminals may not be able to play the content through the received link address because users of the other user terminals do not have an account for the provider. However, when an account logged into the user terminal transmitting the link address supports a multi-user function or supports the multi-user function in a temporary situation (e.g., sharing content in a vehicle (e.g., the vehicle 300 in FIG. 3)), the other user terminals may be able to execute the content through the link address.

The second user terminal 820 may transmit, to the electronic device 800, the content data of the content being executed.

In operation 807, the electronic device 800 may receive the content data from the second user terminal 820.

In operation 809, the first user terminal 810 may receive, from the user, a display command to display the content data through an identified device. According to an embodiment, the first user terminal 810 may receive, from the user, the display command to display the content data through the first user terminal 810 and/or the electronic device 800. According to an embodiment, the first user terminal 810 may receive, from the user, the display command to display the content data for all user terminals connected to the electronic device 800. The first user terminal 810 may transmit the received display command to the electronic device 800.

In operation 811, the electronic device 800 may transmit the content data based on the display command. The electronic device 800 may transmit the content data to one or more of the user terminals connected to the electronic device 800 based on the display command. In operation 813, when the display command is a command to display the content data through the electronic device 800, the electronic device 800 may display the content data on a display module (e.g., the display module 160 in FIG. 1, the display module 205 in FIG. 2, the display module 310 in FIG. 3, and the display modules 600 and 610 in FIG. 6) of the electronic device 800 without transmitting the content data to other user terminals. According to an embodiment, in a case of displaying the content data on the electronic device 800, the second user terminal 820 may transmit the content data to the electronic device 800 using a mirroring or streaming method. According to an embodiment, the electronic device 800 may include a plurality of display modules. For example, the electronic device 800 may further include a display module installed on the back of a headrest of a driver seat and/or passenger seat. The electronic device 800 may display the content data on each of the plurality of display modules.

In operation 815, the first user terminal 810 may receive the content data and display it on a display module (e.g., the display module 215 in FIG. 2 and the display module 510 in FIG. 5). For example, when the display command is a command to display the content data through the first user terminal 810, the electronic device 800 may transmit the content data to the first user terminal 810. The first user terminal 810 may then display the received content data through the display module of the first user terminal 810. According to an embodiment, all the user terminals connected to the electronic device 800 may display the content data through their respective displays. In this case, the user terminal executing the content may transmit the content data directly to the other user terminals without through the electronic device 800. According to an embodiment, all the user terminals connected to the electronic device 800 may display the content data through their respective displays. In this case, the user terminal executing the content may transmit the content data to the other user terminals through the electronic device 800. That is, the user terminal executing the content may transmit the content data to the other user terminals using a broadcast method or a multicast method.

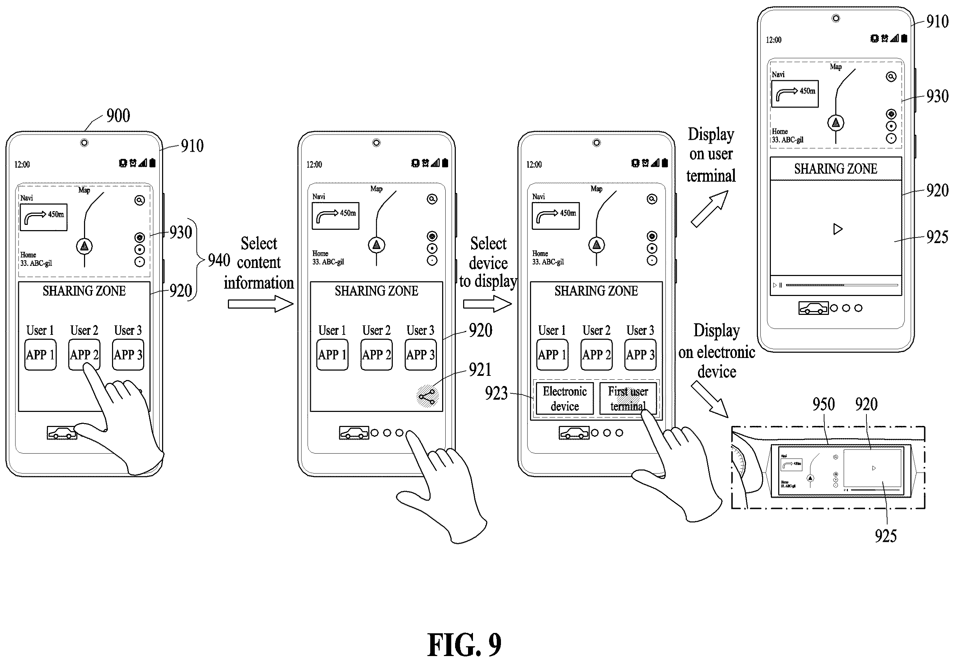

Referring to FIG. 9, a method of displaying content data according to an embodiment of the present disclosure will be described below.

Referring to FIG. 9, shown is a user terminal 900 (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, and the second user terminal 820 in FIG. 8) that is displaying a first screen 920 (e.g., the first screen 540 in FIG. 5 and the first screen 620 in FIG. 6) and a second screen 930 (e.g., the second screen 550 in FIG. 5 and the second screen 630 in FIG. 6).

A display module 910 (e.g., the display module 215 in FIG. 2 and the display module 510 in FIG. 5) of the user terminal 900 may display a shared UI 940 (e.g., the shared UI 560 in FIG. 5 and the shared UI 640 in FIG. 6) including the first screen 920 and the second screen 930. A user of the user terminal 900 may select content information that the user desires to execute from the first screen 920. For example, the user may select content information shared from a second user terminal (e.g., the electronic device 102 in FIG. 1, the user terminal 210 in FIG. 2, the second user terminal 330 in FIG. 3, the second user terminal 420 in FIG. 4, and the second user terminal 820 in FIG. 8).

After selecting the content information that the user desires to execute from the first screen 920, the user may select an icon 921 (e.g., the icon 541 in FIG. 5) to select which device is to be used to display content data 925. When the icon 921 is selected, the user terminal 900 may display buttons 923 for receiving, from the user, a display command to display the content data 925 using a device.

The user terminal 900 may receive the display command through any of the buttons 923. For example, the user terminal 900 may receive the display command such that a current terminal (e.g., a first user terminal) currently displaying the first screen 920 is to display the content data 925. According to an embodiment, the user terminal 900 may receive, through the buttons 923, the display command to display the content data 925 by all user terminals and/or all the user terminals and electronic device, in addition to the electronic device and the current terminal.

When the display command received by the user terminal 900 is a command to display content data on the current terminal, the user terminal 900 may receive the content data 925 from the electronic device (e.g., the electronic device 101 in FIG. 1, the electronic device 200 in FIG. 2, the electronic device 400 in FIG. 4, and the electronic device 800 in FIG. 8) and display the content data 925 through the first screen 920. According to an embodiment, the user terminal 900 may display the content data 925 using an entire area of the display module 910. For example, when the user terminal 900 is grabbed in a horizontal direction, the user terminal 900 may display the content data 925 in the entire area of the display module 910 without displaying a second area 930.

When the display command received by the user terminal 900 is a command to display content data on the electronic device, the electronic device may display the content data 925 through a display module 950 (e.g., the display module 160 in FIG. 1, the display module 205 in FIG. 2, the display module 310 in FIG. 3, the display module 600 in FIG. 6, and the display module 610 in FIG. 6). The user terminal 900 may display the content data 925 on the first screen 920 that is being displayed on the display module 950. According to an embodiment, the electronic device may display the content data 925 in an entire area of the display module 950.

The method described above is provided only as one of various embodiments of displaying content data (e.g., the content data 925), and it will be apparent to those skilled in the art that the present disclosure is not limited thereto.

Hereinafter, a method of adding content information to a first screen (e.g., the first screen 920) will be described.

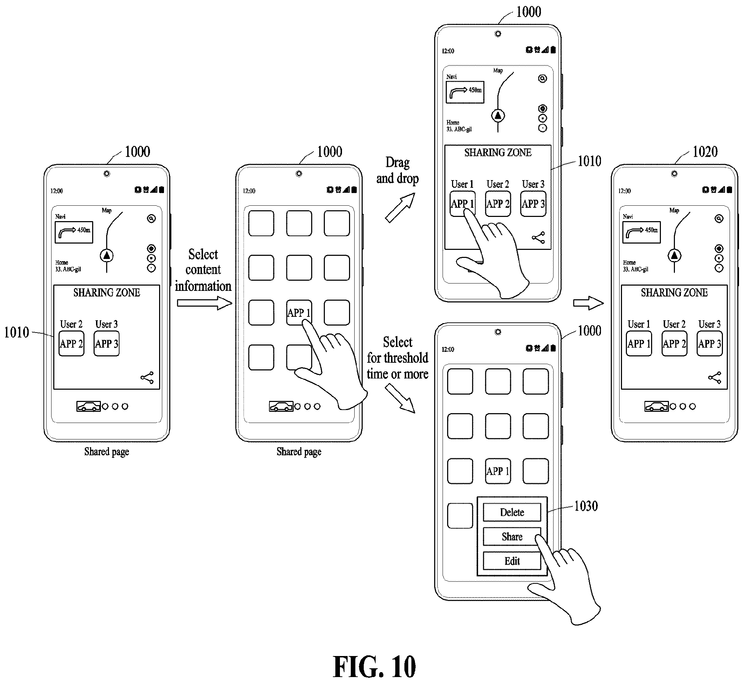

FIG. 10 is a diagram illustrating a method of adding content information according to an embodiment of the present disclosure.

Referring to FIG. 10, shown is a first screen 1010 (e.g., the first screen 540 in FIG. 5, the first screen 620 in FIG. 6, and the first screen 920 in FIG. 9) displaying only APP 2 and APP 3. APP 2 and APP 3 may be content information that is preset to be shared on a second user terminal (e.g., the electronic device 102 in FIG. 1, the user terminal 210 in FIG. 2, the second user terminal 330 in FIG. 3, the second user terminal 420 in FIG. 4, and the second user terminal 820 in FIG. 8) and a third user terminal (e.g., the electronic device 102 in FIG. 1, the user terminal 210 in FIG. 2, the third user terminal 340 in FIG. 3, and the third user terminal 430 in FIG. 4), respectively.

A user of a user terminal 1000 (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, the second user terminal 820 in FIG. 8, and the user terminal 900 in FIG. 9) may desire to additionally share content information included in the user terminal 1000. The user of the user terminal 1000 may select the content information they desire to share from a home screen (e.g., the home screen 511 in FIG. 5).

According to an embodiment, the user may additionally share the content information by dragging and dropping, onto the first screen 1010, the content information desired by the user to share. The user terminal 1000 may transmit the added content information to an electronic device (e.g., the electronic device 101 in FIG. 1, the electronic device 200 in FIG. 2, the electronic device 400 in FIG. 4, and the electronic device 800 in FIG. 8) mounted on a vehicle (e.g., the vehicle 300 in FIG. 3). The electronic device may update a shared UI to display the added content information. The electronic device may synchronize other user terminals to display the updated shared UI. For example, a second user terminal 1020 (e.g., the electronic device 102 in FIG. 1, the user terminal 210 in FIG. 2, the second user terminal 330 in FIG. 3, the second user terminal 420 in FIG. 4, and the second user terminal 820 in FIG. 8) may display the added content information.

According to an embodiment, the user may select the content information to be shared, for a threshold time or longer. The user terminal 1000 may receive the content information being selected by the user for the threshold time or longer. The user terminal 1000 may display a pop-up window 1030 below the content information selected for the threshold time or longer. The pop-up window 1030 may include buttons for executing various functions for the content information. The user may select a share button from the pop-up window 1030 and add, to the first screen 1010, the content selected for the threshold time or longer and share the selected content with other user terminals. The user terminal 1000 may transmit the content information selected through the share button to the electronic device. The electronic device may update the shared UI to display the added content information. The electronic device may synchronize the other user terminals to display the updated shared UI.

It will be apparent to those skilled in the art that the method of adding content information described above is provided only as one of various embodiments and the present disclosure is not limited thereto.

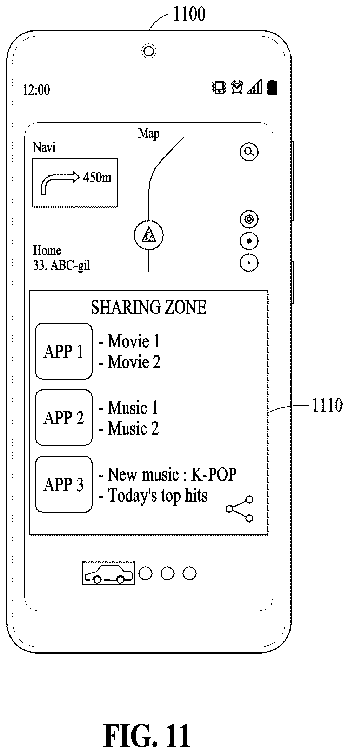

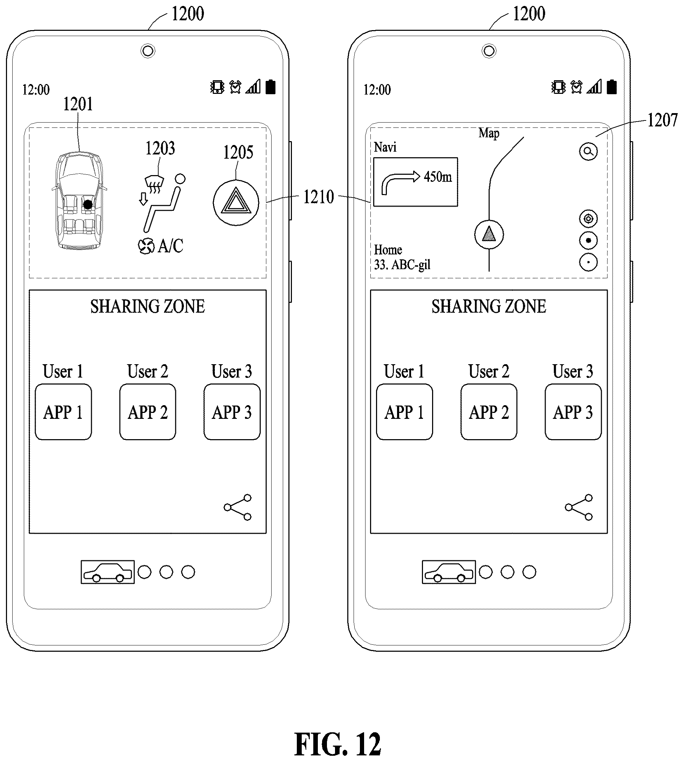

FIGS. 11 and 12 are diagrams illustrating information displayed on a shared UI according to an embodiment of the present disclosure.

Referring to FIG. 11, shown is an example of displaying content information on a first screen 1110 (e.g., the first screen 540 in FIG. 5, the first screen 620 in FIG. 6, the first screen 920 in FIG. 9, and the first screen 1010 in FIG. 10).

A user terminal 1100 (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, the second user terminal 820 in FIG. 8, the user terminal 900 in FIG. 9, the user terminal 1000 in FIG. 10, and the second user terminal 1020 in FIG. 10) may further display a content list rather than simply displaying pieces of shared content information. For example, the content list may be a recommendation list set in advance by a user of a user terminal sharing the corresponding content information for sharing. The content list may be a recommendation list provided by a provider of the shared content information. The examples of the content list are provided only as one of various embodiments, and the present disclosure is not limited thereto.

Referring to FIG. 12, shown is vehicle-related information about a vehicle (e.g., the vehicle 300 in FIG. 3) that is displayed on a second screen 1210 (e.g., the second screen 550 in FIG. 5, the second screen 630 in FIG. 6, and the second screen 930 in FIG. 9).

The vehicle-related information displayed on the second screen 1210 may include navigation information 1207 executed by an electronic device mounted on the vehicle. The vehicle-related information displayed on the second screen 1210 may include driving information of the vehicle. The driving information of the vehicle may include, for example, the speed of the vehicle, the total distance traveled by the vehicle, the fuel efficiency of the vehicle, and the like. The vehicle-related information displayed on the second screen 1210 may include control information for peripheral devices mounted on the vehicle. The control information for peripheral devices mounted on the vehicle may include, for example, lighting information 1201, vehicle air conditioning information 1203, and hazard light information 1205. The foregoing information displayed on the second screen 1210 is provided only as an example, and the present disclosure is not limited thereto. A user terminal 1200 may change the information being displayed on the second screen 1210 by receiving, as an input, a preset gesture from a user.

The user may control the peripheral devices using the control information for the peripheral devices mounted on the vehicle that is displayed on the second screen 1210. For example, the user may check the lighting information 1201 on the second screen 1210 to check whether the lighting is turned on/off. The user may touch the lighting information 1201 to control the lighting to be turned on/off. For example, the user may check the temperature inside the vehicle using the vehicle air conditioning information 1203. The user may control the vehicle air conditioning information 1203 to control an air conditioning device to increase or decrease the temperature inside the vehicle.

However, in a case in which the air conditioning device and/or lighting related to a driver seat is controlled by an occupant, not by the driver, this may affect the driver and distract the driver. Accordingly, the electronic device (e.g., the electronic device 101 in FIG. 1, the electronic device 200 in FIG. 2, the electronic device 400 in FIG. 4, and the electronic device 800 in FIG. 8) may be configured to display, for a user terminal, only the control information based on a location of the user terminal.

In one embodiment, the electronic device may be configured to identify a location of each of two or more user terminals present in the vehicle. In one example, the electronic device may identify the location of a user terminal in the vehicle based on a charging or communications port that the user terminal is connected to. In another example, the electronic device may identify the location of a user terminal in the vehicle based on input provided by the user terminal (i.e., the user of the user terminal may identify their location in the vehicle).

In one embodiment, the electronic device may identify the location of a user terminal in the vehicle based on information received from one or more sensors in the user terminal. The electronic device may control the output of various lights and/or speakers in the vehicle and obtain data from sensors (e.g., sensor module 176 and camera module 180 in FIG. 1) to identify the location of a user terminal in the vehicle based on information received from the sensors. For example, the electronic device may activate a light above a front passenger seat and obtain data from a camera of the user terminals in the vehicle to identify whether one of the user terminals is located in the front passenger seat.

The electronic device may synchronize the two or more user terminals such that they display different control information based on the identified location of each of the two or more user terminals. For example, the electronic device may identify a location of a user terminal of an occupant seated on a passenger seat and perform synchronization such that the user terminal displays control information related to the passenger seat. The electronic devices may perform synchronization such that the user terminal displays control information for the lighting facing the passenger seat and control information for an air conditioning device facing the passenger seat. On the other hand, the hazard light information 1205 may be displayed to all user terminals connected to the electronic device to allow access to all the user terminals in the event of an emergency.

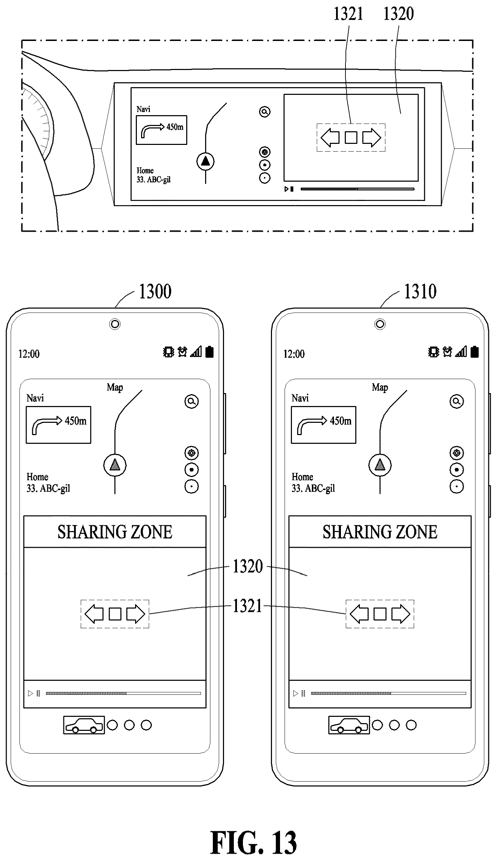

FIG. 13 is a diagram illustrating an example of controlling content according to an embodiment of the present disclosure.

Referring to FIG. 13, shown are an electronic device (e.g., the electronic device 101 in FIG. 1, the electronic device 200 in FIG. 2, the electronic device 400 in FIG. 4, and the electronic device 800 in FIG. 8), a first user terminal 1300 (e.g., the electronic device 102 in FIG. 1, the user terminal 210 in FIG. 2, the first user terminal 320 in FIG. 3, the first user terminal 410 in FIG. 4, the user terminal 500 in FIG. 5, the first user terminal 810 in FIG. 8, the user terminal 900 in FIG. 9, the user terminal 1000 in FIG. 10, the user terminal 1100 in FIG. 11, and the user terminal 1200 in FIG. 12), and a second user terminal 1310 (e.g., the electronic device 102 in FIG. 1, the user terminal 210 in FIG. 2, the second user terminal 330 in FIG. 3, the second user terminal 420 in FIG. 4, the second user terminal 820 in FIG. 8, and the second user terminal 1020 in FIG. 10), which are displaying content data 1320 (e.g., the content data 925 in FIG. 9).

The content data 1320 may be controlled by a control button 1321. In a case in which the content data 1320 is a video, the control button 1321 may include a rewind button, a stop/play button, and a fast-forward button.

According to an embodiment, the content data 1320 may be controlled when the control button 1321 displayed on any one of the electronic device, the first user terminal 1300, and the second user terminal 1310 is selected. For example, when the electronic device, the first user terminal 1300, and the second user terminal 1310 are displaying the same content data 1320 based on the same content being executed, a user may control the content data 1320 that is being displayed on the electronic device, the first user terminal 1300, and the second user terminal 1310 all at once by using the control button 1321 displayed on any one of the electronic device, the first user terminal 1300, and the second user terminal 1310.

According to an embodiment, when the electronic device, the first user terminal 1300, and the second user terminal 1310 display different content data 1320, the user may control individually the electronic device, the first user terminal 1300, and the second user terminal 1310 by using the control button 1321 included in each of the electronic device, the first user terminal 1300, and the second user terminal 1310.

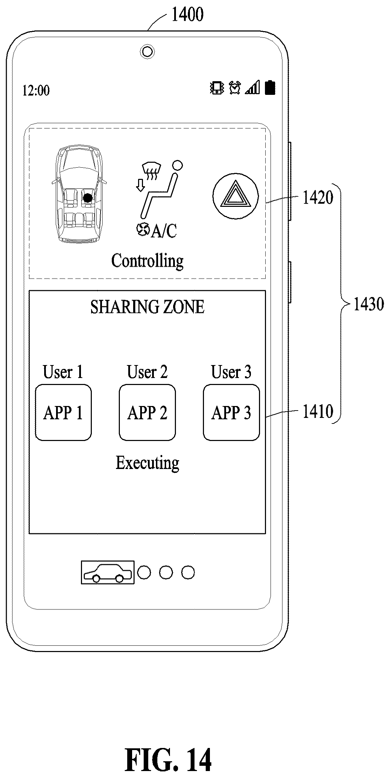

FIG. 14 is a diagram illustrating an example of displaying content information according to an embodiment of the present disclosure.

Referring to FIG. 14, shown is a user terminal 1400 (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, the second user terminal 820 in FIG. 8, the user terminal 900 in FIG. 9, the user terminal 1000 in FIG. 10, the second user terminal 1020 in FIG. 10, the user terminal 1100 in FIG. 11, the user terminal 1200 in FIG. 12, the first user terminal 1300 in FIG. 13, and the second user terminal 1310 in FIG. 13) that is displaying a shared UI 1430 (e.g., the shared UI 560 in FIG. 5, the shared UI 640 in FIG. 6, and the shared UI 940 in FIG. 9).

According to an embodiment, when shared content information is selected by another user terminal and is being executed, a first screen 1410 (e.g., the first screen 540 in FIG. 5, the first screen 620 in FIG. 6, the first screen 920 in FIG. 9, the first screen 1010 in FIG. 10, and the first screen 1110 in FIG. 11) may display "executing" at the bottom of the content information. When a user selects the content information that is already selected by the other user terminal and is being executed, a user terminal sharing the content information may execute the content again. In this case, the user terminal sharing the content information may experience resource shortages and rapid battery consumption. The user terminal 1400 may display "executing" for the shared content information that is selected by the other user terminal and is being executed to induce the user to select another shared content information.

According to an embodiment, when control information for a peripheral device mounted on a vehicle (e.g., the vehicle 300 in FIG. 3) displayed on a second screen 1420 (e.g., the second screen 550 in FIG. 5, the second screen 630 in FIG. 6, the second screen 930 in FIG. 9, and the second screen 1210 in FIG. 12) is being controlled by another user terminal, the user terminal 1400 may display "controlling" at the bottom of the control information. For example, when a user is controlling an air conditioning device, the user terminal 1400 may display "controlling" at the bottom of vehicle air conditioning information (e.g., the vehicle air conditioning information 1203 in FIG. 12) on the second screen 1420. By displaying "controlling" on the second screen 1420, the user terminal 1400 may notify the user that the air conditioning device is currently under control. By displaying a control state of the peripheral device, the user terminal 1400 may prevent duplicate control by multiple users.

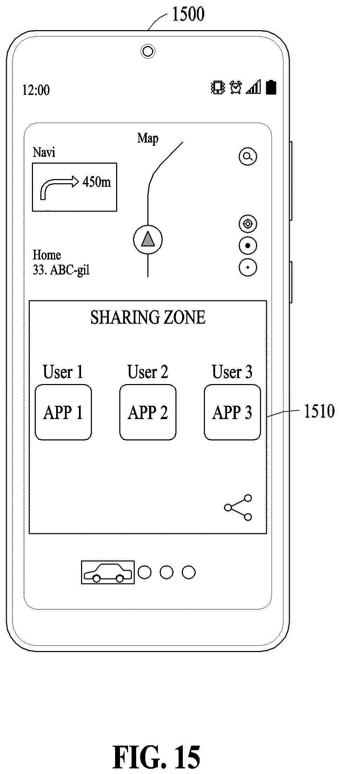

FIG. 15 is a diagram illustrating an example of sharing content information according to an embodiment of the present disclosure.

Referring to FIG. 15, shown is a first screen 1510 (e.g., the first screen 540 in FIG. 5, the first screen 620 in FIG. 6, the first screen 920 in FIG. 9, the first screen 1010 in FIG. 10, the first screen 1110 in FIG. 11, and the first screen 1410 in FIG. 14) of an user terminal 1500 (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, the second user terminal 820 in FIG. 8, the user terminal 900 in FIG. 9, the user terminal 1000 in FIG. 10, the second user terminal 1020 in FIG. 10, the user terminal 1100 in FIG. 11, the user terminal 1200 in FIG. 12, the first user terminal 1300 in FIG. 13, the second user terminal 1310 in FIG. 13, and the user terminal 1400 in FIG. 14) with which content information is shared.

The first screen 1510 may include APP1 shared from a first user terminal (e.g., the electronic device 102 in FIG. 1, the user terminal 210 in FIG. 2, the first user terminal 320 in FIG. 3, the first user terminal 410 in FIG. 4, the user terminal 500 in FIG. 5, the first user terminal 810 in FIG. 8, the user terminal 900 in FIG. 9, the user terminal 1000 in FIG. 10, the user terminal 1100 in FIG. 11, the user terminal 1200 in FIG. 12, and the first user terminal 1300 in FIG. 13), a second user terminal (e.g., the electronic device 102 in FIG. 1, the user terminal 210 in FIG. 2, the second user terminal 330 in FIG. 3, the second user terminal 420 in FIG. 4, the second user terminal 820 in FIG. 8, the second user terminal 1020 in FIG. 10, and the second user terminal 1310 in FIG. 13), and a third user terminal (e.g., the electronic device 102 in FIG. 1, the user terminal 210 in FIG. 2, the third user terminal 340 in FIG. 3, and the third user terminal 430 in FIG. 4).

According to an embodiment, the same content information shared from the respective user terminals may be displayed separately on the first screen 1510. For example, the first screen 1510 may display APP 1 which is the same content information shared from the user terminals, separately. A user may select content information corresponding to a user terminal that is to play it from APP 1 that is being displayed separately.

According to an embodiment, the same content information shared from the respective user terminals may be displayed as one on the first screen 1510. For example, the first screen 1510 may display, as one icon, APP 1 which is the same content information shared from the respective user terminals. In this case, when the user selects APP 1, an electronic device (e.g., the electronic device 101 in FIG. 1, the electronic device 200 in FIG. 2, the electronic device 400 in FIG. 4, and the electronic device 800 in FIG. 8) may transmit an execution command to any one of the user terminals sharing APP 1. The electronic device may select the best performing terminal from among the user terminals sharing the APP 1 to transmit the execution command thereto. In this case, when the electronic device and the user terminals are connected, the user terminals may each transmit, to the electronic device, the performance of each user terminal in addition to content information to be shared. The electronic device may select the terminal from among the user terminals sharing the APP 1 that has the highest battery charge level, or a terminal that is connected to a power source and transmit the execution command thereto.

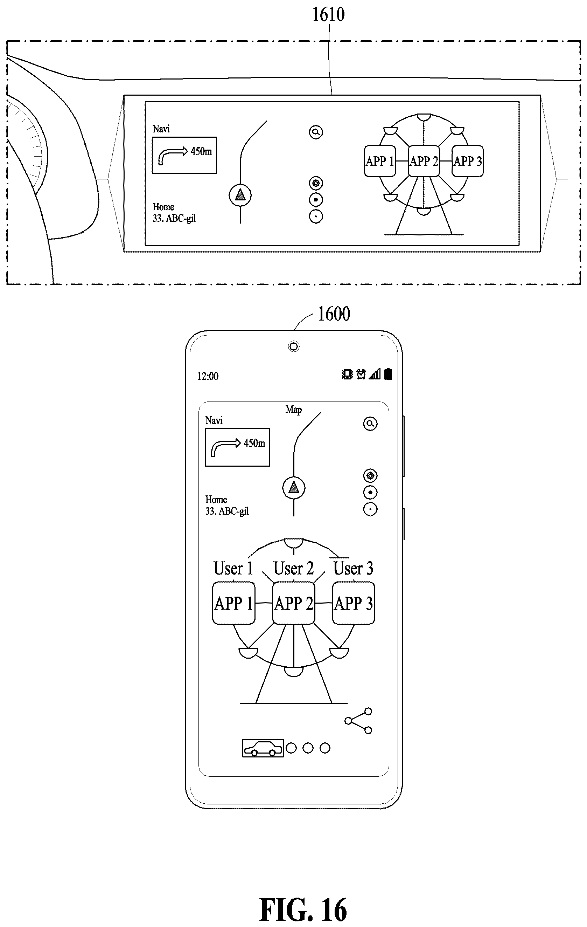

FIG. 16 is a diagram illustrating a theme for a shared UI according to an embodiment of the present disclosure.

Referring to FIG. 16, shown are a user terminal 1600 (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, the second user terminal 820 in FIG. 8, the user terminal 900 in FIG. 9, the user terminal 1000 in FIG. 10, the second user terminal 1020 in FIG. 10, the user terminal 1100 in FIG. 11, the user terminal 1200 in FIG. 12, the first user terminal 1300 in FIG. 13, the second user terminal 1310 in FIG. 13, the user terminal 1400 in FIG. 14, and the user terminal 1500 in FIG. 15) and a display module 1610 (e.g., the display module 160 in FIG. 1, the display module 205 in FIG. 2, the display module 310 in FIG. 3, the display modules 600 and 610 in FIG. 6, and the display module 950 in FIG. 9) of an electronic device (not shown) (e.g., the electronic device 101 in FIG. 1, the electronic device 200 in FIG. 2, the electronic device 400 in FIG. 4, and the electronic device 800 in FIG. 8), which are displaying a shared UI (e.g., the shared UI 560 in FIG. 5, the shared UI 640 in FIG. 6, the shared UI 940 in FIG. 9, and the shared UI 1430 in FIG. 14).

The shared UI displayed on the user terminal 1600 and the display module 1610 of the electronic device may have the same theme applied to provide users with a common and shared experience. For example, when a dark theme is applied to the shared UI displayed on the user terminal 1600, the dark theme may also be applied to the shared UI displayed on the display module 1610 of the electronic device.

According to an embodiment, the electronic device may change the theme of the shared UI based on a location of a vehicle (e.g., the vehicle 300 in FIG. 3) on a map based on a global positioning system (GPS) of the vehicle. The theme of the shared UI based on the location on the map may be a theme associated with a region through which the vehicle is traveling. For example, the theme of the shared UI based on the location on the map may be a theme associated with a representative tourist attraction in the region through which the vehicle is traveling. The electronic device may synchronize user terminals to display the shared UI with the changed theme.

According to an embodiment, the electronic device may change the theme of the shared UI based on a destination on a navigation system being executed by the electronic device. For example, when the destination of the navigation system being executed by the electronic device is a theme park, the electronic device may change the theme of the shared UI to a theme associated with the theme park. The electronic device may synchronize the user terminals to display the shared UI with the changed theme. Referring to FIG. 16, shown are the user terminal 1600 and the display module 1610 of the electronic device that are displaying the shared UI to which a theme including a Ferris wheel is applied when the destination of the navigation system is the theme park.

According to an embodiment, the electronic device may also change the theme of the shared UI based on a time of day. For example, a darker theme may be applied during the evening hours and a brighter theme may be applied during the daytime. In addition, the electronic device may also change the theme of the shared UI based on the age of the occupants of the vehicle. For example, a different theme may be applied to the shared UI based on a determination that all of the occupants are adults than will be applied when a determination is made that one or more of the occupants are children. In one embodiment, the age of the occupant of a seat in a vehicle may be approximated based on the weight of an occupant in the seat of the vehicle.

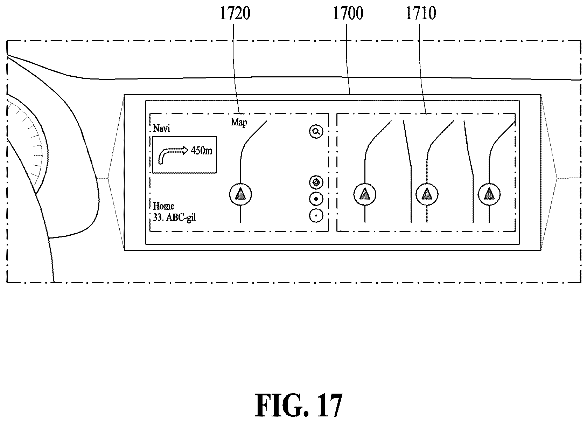

FIG. 17 is a diagram illustrating an example of displaying two or more pieces of navigation information according to an embodiment of the present disclosure.

Referring to FIG. 17, shown is a display module 1700 (e.g., the display module 160 in FIG. 1, the display module 205 in FIG. 2, the display module 310 in FIG. 3, the display modules 600 and 610 in FIG. 6, the display module 950 in FIG. 9, and the display module 1610 in FIG. 16) of an electronic device (e.g., the electronic device 101 in FIG. 1, the electronic device 200 in FIG. 2, the electronic device 400 in FIG. 4, and the electronic device 800 in FIG. 8) that is displaying a plurality of pieces of navigation information.

A first screen 1710 (e.g., the first screen 540 in FIG. 5, the first screen 620 in FIG. 6, the first screen 920 in FIG. 9, the first screen 1010 in FIG. 10, the first screen 1110 in FIG. 11, the first screen 1410 in FIG. 14, and the first screen 1510 in FIG. 15) of the display module 1700 may be divided into a plurality of screens. The plurality of screens may display different content data. The content data displayed on the plurality of screens may be content data received from different user terminals. For example, in a case in which the first screen 1710 is divided into three screens, the three screens may display content data received from different user terminals.

According to an embodiment, the plurality of screens into which the first screen 1710 is divided may display, as content data, different navigation information received from different user terminals. For example, the first screen 1710 may display first navigation information, second navigation information, and third navigation information. Different navigation applications may provide different routes even for the same destination. Therefore, a driver may drive by referring to navigation information being executed by the electronic device displayed on a second screen 1720 (e.g., the second screen 550 in FIG. 5, the second screen 630 in FIG. 6, the second screen 930 in FIG. 9, the second screen 1210 in FIG. 12, and the second screen 1420 in FIG. 14) and to navigation information providing the fastest route among the plurality of pieces of navigation information displayed on the first screen 1710.

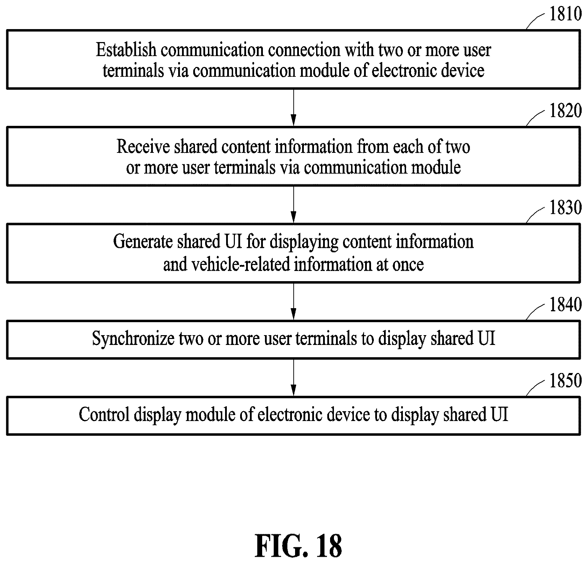

FIG. 18 is a flowchart illustrating a method of operating a vehicle-mounted electronic device according to an embodiment of the present disclosure.

Hereinafter, operations to be described with reference to embodiments may be performed in sequential order but are not necessarily performed in sequential order. For example, the order of the operations may be changed, and at least two of the operations may be performed in parallel. The operations to be described with reference to FIG. 18 may be performed by at least one component of an electronic device (e.g., the electronic device 101 in FIG. 1, the electronic device 200 in FIG. 2, the electronic device 400 in FIG. 4, and the electronic device 800 in FIG. 8).

In operation 1810, the electronic device may establish a communication connection with two or more user terminals (e.g., the electronic device 102 in FIG. 1, the user terminal 210 in FIG. 2, the first to fourth user terminals 320 to 350 in FIG. 3, the first to fourth user terminals 410 to 440 in FIG. 4, the user terminal 500 in FIG. 5, the first user terminal 810 in FIG. 8, the second user terminal 820 in FIG. 8, the user terminal 900 in FIG. 9, the user terminal 1000 in FIG. 10, the second user terminal 1020 in FIG. 10, the user terminal 1100 in FIG. 11, the user terminal 1200 in FIG. 12, the first user terminal 1300 in FIG. 13, the second user terminal 1310 in FIG. 13, the user terminal 1400 in FIG. 14, the user terminal 1500 in FIG. 15, and the user terminal 1600 in FIG. 16) via a communication module (e.g., the communication module 190 in FIG. 1 and the communication module 203 in FIG. 2) of the electronic device. The electronic device may establish the communication connection with the two or more user terminals located inside the same vehicle via the communication module.

In operation 1820, the electronic device may receive content information shared from each of the two or more user terminals via the communication module communicating with the two or more user terminals located inside a vehicle (e.g., the vehicle 300 in FIG. 3).

In operation 1830, the electronic device may generate a shared UI (e.g., the shared UI 560 in FIG. 5, the shared UI 640 in FIG. 6, the shared UI 940 in FIG. 9, and the shared UI 1430 in FIG. 14) for displaying the content information and vehicle-related information at once.

In operation 1840, the electronic device may synchronize the two or more user terminals to display the shared UI. The electronic device may cause the two or more user terminals to display the shared UI.

In operation 1850, the electronic device may control a display module (e.g., the display module 160 in FIG. 1, the display module 205 in FIG. 2, the display module 310 in FIG. 3, the display modules 600 and 610 in FIG. 6, the display module 950 in FIG. 9, the display module 1610 in FIG. 16, and the display module 1700 in FIG. 17) to display the shared UI.

What has been described above with reference to FIGS. 1 to 17 may apply to the operations described above with reference to FIG. 18, and a more detailed and repeated description thereof will be omitted here.

According to an embodiment, the shared UI may include a first screen (e.g., the first screen 540 in FIG. 5, the first screen 620 in FIG. 6, the first screen 920 in FIG. 9, the first screen 1010 in FIG. 10, the first screen 1110 in FIG. 11, the first screen 1410 in FIG. 14, the first screen 1510 in FIG. 15, and the first screen 1710 in FIG. 17) displaying the content information and a second screen (e.g., the second screen 550 in FIG. 5, the second screen 630 in FIG. 6, the second screen 930 in FIG. 9, the second screen 1210 in FIG. 12, the second screen 1420 in FIG. 14, and the second screen 1720 in FIG. 17) displaying the vehicle-related information.

According to an embodiment, the shared UI may include a screen displaying the content information shared from the each of the two or more user terminals.

According to an embodiment, the content information displayed on the first screen may include information about applications present on each of two or more user terminals to be shared within the vehicle. According to an embodiment, the vehicle-related information displayed on the second screen may include navigation information (e.g., the navigation information 1207 in FIG. 12) executed by the vehicle-mounted electronic device, driving information of the vehicle, and control information for peripheral devices mounted on the vehicle.

According to an embodiment, the content information displayed on the screen may include information about applications present on each of two or more user terminals to be shared within the vehicle.

According to an embodiment, the synchronizing to display the shared UI may include identifying a location of each of the two or more user terminals. According to an embodiment, the synchronizing to display the shared UI may include synchronizing the two or more user terminals such that they display different control information for the peripheral devices mounted on the vehicle based on the identified location within the vehicle.

According to an embodiment, the causing the two or more user terminals to display the shared UI may include identifying a location of each of the two or more user terminals. According to an embodiment, the causing the two or more user terminals to display the shared UI may include synchronizing the two or more user terminals such that they display different control information for the peripheral devices mounted on the vehicle based on the identified location within the vehicle.

According to an embodiment, each of the two or more user terminals may generate, on a home screen (e.g., the home screen 511 in FIG. 5), a shared page (e.g., the shared page 530 in FIG. 5) for displaying the shared UI in response to a connection to the electronic device.

According to an embodiment, the method of operating the electronic device may further include: upon receiving an execution command for content information included in a second user terminal (e.g., the electronic device 102 in FIG. 1, the user terminal 210 in FIG. 2, the second user terminal 330 in FIG. 3, the second user terminal 420 in FIG. 4, the second user terminal 820 in FIG. 8, the second user terminal 1020 in FIG. 10, the second user terminal 1310 in FIG. 13, the user terminal 1400 in FIG. 14, the user terminal 1500 in FIG. 15, and the user terminal 1600 in FIG. 16) among content information included in the first screen from a first user terminal (e.g., the electronic device 102 in FIG. 1, the user terminal 210 in FIG. 2, the first user terminal 320 in FIG. 3, the first user terminal 410 in FIG. 4, the user terminal 500 in FIG. 5, the first user terminal 810 in FIG. 8, the user terminal 900 in FIG. 9, the user terminal 1000 in FIG. 10, the user terminal 1100 in FIG. 11, the user terminal 1200 in FIG. 12, the first user terminal 1300 in FIG. 13, the user terminal 1400 in FIG. 14, the user terminal 1500 in FIG. 15, and the user terminal 1600 in FIG. 16) among the two or more user terminals, transmitting the execution command to the second user terminal. According to an embodiment, the method of operating the vehicle-mounted electronic device may further include: receiving content data of the content information corresponding to the execution command for the content information from the second user terminal.

According to an embodiment, the method of operating the electronic device may further include: upon receiving an execution command for content information included in a second user terminal among content information included in the screen of the shared UI from a first user terminal among the two or more user terminals, transmitting the execution command to the second user terminal. According to an embodiment, the method of operating the electronic device may further include: receiving content data of the content information corresponding to the execution command for the content information from the second user terminal.

According to an embodiment, the method of operating the electronic device may further include: displaying the content data (e.g., the content data 925 in FIG. 9 and the content data 1320 in FIG. 13) on the display module in response to a display command received from the first user terminal. According to an embodiment, the method of operating the vehicle-mounted electronic device may further include: transmitting the content data to the first user terminal (102; 210; 320; 410; 500; 810; 900; 1000; 1100; 1200; 1300; 1400; 1500; 1600).

According to an embodiment, the method of operating the electronic device may further include: upon receiving additional content information from any one of the two or more user terminals, updating the shared UI to display the additional content information. According to an embodiment, the method of operating the electronic device may further include: synchronizing the two or more user terminals to display the updated shared UI. According to an embodiment, the method of operating the electronic device may further include: causing the two or more user terminals to display the updated shared UI.

According to an embodiment, the method of operating the electronic device may further include: changing a theme of the shared UI based on a location of the vehicle on a map based on a GPS of the vehicle 300 or a destination on a navigation system executed by the vehicle-mounted electronic device. According to an embodiment, the method of operating the electronic device may further include: synchronizing the two or more user terminals to display the shared UI to which the changed theme is applied. According to an embodiment, the method of operating the electronic device may further include: causing the two or more user terminals to display the shared UI to which the changed theme is applied.

According to an embodiment of the present disclosure, a electronic device may include a communication module configured to communicate with two or more user terminals present inside a vehicle. According to an embodiment, the electronic device may include a display module configured to display a shared UI in response to a connection to the two or more user terminals. According to an embodiment, the electronic device may include a processor (e.g., the processor 120 in FIG. 1 and the processor 201 in FIG. 2) configured to receive content information to be shared from each of the two or more user terminals. According to an embodiment, the electronic device may include the processor configured to synchronize the two or more user terminals to display the shared UI for displaying, at once, the content information and vehicle-related information.

According to an embodiment, the electronic device may include a communication module configured to communicate with two or more user terminals present. According to an embodiment, the electronic device may include a display module configured to display a shared UI in response to a connection to the two or more user terminals. According to an embodiment, the electronic device may include a processor configured to receive content information to be shared from each of the two or more user terminals. According to an embodiment, the electronic device may include the processor configured to cause the two or more user terminals to display the shared UI.

According to an embodiment, the shared UI may include a first screen displaying the content information. According to an embodiment, the shared UI may include a second screen displaying the vehicle-related information.

According to an embodiment, the content information displayed on the first screen may include information about applications present on each of the two or more user terminals to be shared within the vehicle. According to an embodiment, the vehicle-related information displayed on the second screen may include navigation information executed by the vehicle-mounted electronic device. According to an embodiment, the vehicle-related information displayed on the second screen may include driving information of the vehicle. According to an embodiment, the vehicle-related information displayed on the second screen may include control information for peripheral devices mounted on the vehicle.

According to an embodiment, the processor may identify a location of each of the two or more user terminals within the vehicle. According to an embodiment, the processor may synchronize the two or more user terminals such that they display different control information for the peripheral devices mounted on the vehicle based on the identified location within the vehicle.

According to an embodiment, each of the two or more user terminals may generate, on a home screen, a shared page for displaying the shared UI in response to a connection to the vehicle-mounted electronic device.

According to an embodiment, upon receiving an execution command for content information included in a second user terminal among the content information included in the first screen from a first user terminal among the two or more user terminals, the processor may transmit the execution command to the second user terminal. According to an embodiment the processor may receive content data of the content information corresponding to the execution command from the second user terminal.

According to an embodiment, upon receiving an execution command for content information included in a second user terminal among the content information included in a screen of shared UI from a first user terminal among the two or more user terminals, the processor may transmit the execution command to the second user terminal. According to an embodiment the processor may receive content data of the content information corresponding to the execution command from the second user terminal.

According to an embodiment, the processor may display the content data on the display module in response to a display command received from the first user terminal. According to an embodiment, the processor may transmit the content data to the first user terminal.

According to an embodiment, upon receiving additional content information from any one of the two or more user terminals, the processor may update the shared UI to display the additional content information. According to an embodiment, the processor may synchronize the two or more user terminals to display the updated shared UI. According to an embodiment, the processor may cause the two or more user terminals to display the updated shared UI.

According to an embodiment, the processor may change a theme of the shared UI based on a location of the vehicle on a map based on a GPS of the vehicle or a destination of a navigation system being executed by the vehicle-mounted electronic device. According to an embodiment, the processor may synchronize the two or more user terminals to display the shared UI to which the changed theme is applied. According to an embodiment, the processor may cause the two or more user terminals to display the shared UI to which the changed theme is applied.

According to an embodiment of the present disclosure, a user terminal may include a communication module (e.g., the communication module 213 in FIG. 2) configured to communicate with a vehicle-mounted electronic device. According to an embodiment, the user terminal may include a display module (e.g., the display module 215 in FIG. 2, the display module 510 in FIG. 5, and the display module 910 in FIG. 9) configured to display a shared UI in response to synchronization by the vehicle-mounted electronic device. According to an embodiment, the user terminal may include a processor (e.g., the processor 211 in FIG. 2) configured to generate, on a home screen, a shared page for displaying the shared UI. According to an embodiment, the user terminal may include the processor configured to control the display module to display the shared UI synchronized from the vehicle-mounted electronic device. According to an embodiment, the shared UI may include a first screen displaying content information included in the user terminal and content information shared from another user terminal. According to an embodiment, the shared UI may include a second screen displaying vehicle-related information.

According to an embodiment, the processor may receive an execution command for content information included in the first screen from a user. According to an embodiment, when the execution command is a command to display content data of content information shared from another user terminal, the processor may transmit the execution command to the vehicle-mounted electronic device.

According to an embodiment, wherein the information related to the vehicle displayed on the second screen includes navigation information executed by the electronic device mounted on the vehicle, driving information of the vehicle, and control information for peripheral devices mounted on the vehicle.

According to an embodiment, wherein the control information for peripheral devices mounted on the vehicle is determined based on a location of the user terminal within the vehicle.

According to an embodiment, wherein the content information included in the user terminal displayed on the first screen includes an indication of whether content included in the user terminal is being executed by another user terminal.

While the disclosure has been shown and described with reference to certain embodiments thereof, it will be understood by those skilled in the art that various changes in form and details may be made therein without departing from the scope of the disclosure. Therefore, the scope of the disclosure should not be defined as being limited to the embodiments but should be defined by the appended claims and equivalents thereof.

## Claims

1. An electronic device (101; 200; 400; 800) mounted on a vehicle (300), comprising:
a communication module (190; 203);
a display module (160; 205; 310; 600, 610; 950; 1610; 1700); and
a processor (120; 201) configured to:
establish, via the communication module (190; 203), a communication connection with two or more user terminals (102; 210; 320, 330, 340, 350; 410, 420, 430, 440; 500; 810, 820; 900; 1000, 1020; 1100; 1200; 1300, 1310; 1400; 1500; 1600);
receive, via the communication module (190; 203), content information to be shared from each of the two or more user terminals (102; 210; 320, 330, 340, 350; 410, 420, 430, 440; 500; 810, 820; 900; 1000, 1020; 1100; 1200; 1300, 1310; 1400; 1500; 1600);
generate a shared user interface (UI)(560; 640; 940; 1430) for displaying the content information; and
cause the two or more user terminals (102; 210; 320, 330, 340, 350; 410, 420, 430, 440; 500; 810, 820; 900; 1000, 1020; 1100; 1200; 1300, 1310; 1400; 1500; 1600) to display the shared UI (560; 640; 940; 1430); and
control the display module (160; 205; 310; 600, 610; 950; 1610; 1700) to display the shared UI (560; 640; 940; 1430) .

2. The electronic device (101; 200; 400; 800) of claim 1, wherein the shared UI (560; 640; 940; 1430) comprises:
a screen (540; 620; 920; 1010; 1110; 1410; 1510; 1710) displaying the content information, shared from the each of the two or more user terminals (102; 210; 320, 330, 340, 350; 410, 420, 430, 440; 500; 810, 820; 900; 1000, 1020; 1100; 1200; 1300, 1310; 1400; 1500; 1600).

3. The electronic device (101; 200; 400; 800) any one of claims 1 to 2, wherein the content information displayed on the screen (540; 620; 920; 1010; 1110; 1410; 1510; 1710) comprises information about applications present on each of the two or more user terminals (102; 210; 320, 330, 340, 350; 410, 420, 430, 440; 500; 810, 820; 900; 1000, 1020; 1100; 1200; 1300, 1310; 1400; 1500; 1600) to be shared within a vehicle (300).

4. The electronic device (101; 200; 400; 800) any one of claims 1 to 3, wherein the processor (120; 201) is configured to:
identify a location of each of the two or more user terminals (102; 210; 320, 330, 340, 350; 410, 420, 430, 440; 500; 810, 820; 900; 1000, 1020; 1100; 1200; 1300, 1310; 1400; 1500; 1600) within the vehicle (300), and synchronize the two or more user terminals (102; 210; 320, 330, 340, 350; 410, 420, 430, 440; 500; 810, 820; 900; 1000, 1020; 1100; 1200; 1300, 1310; 1400; 1500; 1600) such that they display different control information for the peripheral devices mounted on the vehicle (300) based on the identified location within the vehicle (300).

5. The electronic device (101; 200; 400; 800) any one of claims 1 to 4, wherein each of the two or more user terminals (102; 210; 320, 330, 340, 350; 410, 420, 430, 440; 500; 810, 820; 900; 1000, 1020; 1100; 1200; 1300, 1310; 1400; 1500; 1600) is configured to:
generate, on a home screen (511), a shared page (530) for displaying the shared UI (560; 640; 940; 1430) in response to a connection to the electronic device (101; 200; 400; 800).

6. The electronic device (101; 200; 400; 800) of any one of claims 1 to 5, wherein the processor (120; 201) is configured to:
upon receiving an execution command for content information included in a second user terminal among the content information included in a screen (540; 620; 920; 1010; 1110; 1410; 1510; 1710) of the shared UI from a first user terminal among the two or more user terminals (102; 210; 320, 330, 340, 350; 410, 420, 430, 440; 500; 810, 820; 900; 1000, 1020; 1100; 1200; 1300, 1310; 1400; 1500; 1600) , transmit the execution command to the second user terminal and receive content data (925; 1320) of the content information corresponding to the execution command from the second user terminal.

7. The electronic device (101; 200; 400; 800) of any one of claims 1 to 6, wherein the processor (120; 201) is configured to:
display the content data (925; 1320) on the display module (160; 205; 310; 600, 610; 950; 1610; 1700) or transmit the content data (925; 1320) to the first user terminal, in response to a display command received from the first user terminal.

8. The electronic device (101; 200; 400; 800) of any one of claims 1 to 7, wherein the processor (120; 201) is configured to:
upon receiving additional content information from any one of the two or more user terminals (102; 210; 320, 330, 340, 350; 410, 420, 430, 440; 500; 810, 820; 900; 1000, 1020; 1100; 1200; 1300, 1310; 1400; 1500; 1600), update the shared UI (560; 640; 940; 1430) to display the additional content information; and
cause the two or more user terminals (102; 210; 320, 330, 340, 350; 410, 420, 430, 440; 500; 810, 820; 900; 1000, 1020; 1100; 1200; 1300, 1310; 1400; 1500; 1600) to display the updated shared UI (560; 640; 940; 1430) .

9. The electronic device (101; 200; 400; 800) of any one of claims 1 to 8, wherein the processor (120; 201) is configured to:
change a theme of the shared UI (560; 640; 940; 1430) based on a location of a vehicle (300) on a map based on a global positioning system (GPS) of the vehicle (300) or a destination of a navigation system being executed by the electronic device (101; 200; 400; 800) mounted on the vehicle (300), and cause the two or more user terminals (102; 210; 320, 330, 340, 350; 410, 420, 430, 440; 500; 810, 820; 900; 1000, 1020; 1100; 1200; 1300, 1310; 1400; 1500; 1600) to display the shared UI (560; 640; 940; 1430) to which the changed theme is applied.

10. A method of operating an electronic device (101; 200; 400; 800), the method comprising:
establishing, via a communication module (190; 203) of the electronic device (101; 200; 400; 800), a communication connection with two or more user terminals (102; 210; 320, 330, 340, 350; 410, 420, 430, 440; 500; 810, 820; 900; 1000, 1020; 1100; 1200; 1300, 1310; 1400; 1500; 1600) ;
receiving via the communication module (190; 203), content information to be shared from each of the two or more user terminals (102; 210; 320, 330, 340, 350; 410, 420, 430, 440; 500; 810, 820; 900; 1000, 1020; 1100; 1200; 1300, 1310; 1400; 1500; 1600) ;
generating a shared user interface (UI)(560; 640; 940; 1430) for displaying, at once, the content information;
causing the two or more user terminals (102; 210; 320, 330, 340, 350; 410, 420, 430, 440; 500; 810, 820; 900; 1000, 1020; 1100; 1200; 1300, 1310; 1400; 1500; 1600) to display the shared UI (560; 640; 940; 1430) ; and
controlling a display module (160; 205; 310; 600, 610; 950; 1610; 1700) of the electronic device (101; 200; 400; 800) to display the shared UI (560; 640; 940; 1430) .

11. The method of claim 10, wherein the shared UI (560; 640; 940; 1430) comprises:
a screen (540; 620; 920; 1010; 1110; 1410; 1510; 1710) displaying the content information shared from from the each of the two or more user terminals (102; 210; 320, 330, 340, 350; 410, 420, 430, 440; 500; 810, 820; 900; 1000, 1020; 1100; 1200; 1300, 1310; 1400; 1500; 1600).

12. The method of any one of claims 10 to 11, wherein the content information displayed on the screen (540; 620; 920; 1010; 1110; 1410; 1510; 1710) includes information about applications present on each of the two or more user terminals (102; 210; 320, 330, 340, 350; 410, 420, 430, 440; 500; 810, 820; 900; 1000, 1020; 1100; 1200; 1300, 1310; 1400; 1500; 1600) to be shared within a vehicle (300).

13. The method of any one of claims 10 to 12, wherein the causing the two or more user terminals (102; 210; 320, 330, 340, 350; 410, 420, 430, 440; 500; 810, 820; 900; 1000, 1020; 1100; 1200; 1300, 1310; 1400; 1500; 1600) to display the shared UI comprises:
identifying a location of each of the two or more user terminals (102; 210; 320, 330, 340, 350; 410, 420, 430, 440; 500; 810, 820; 900; 1000, 1020; 1100; 1200; 1300, 1310; 1400; 1500; 1600) within the vehicle (300), and synchronizing the two or more user terminals (102; 210; 320, 330, 340, 350; 410, 420, 430, 440; 500; 810, 820; 900; 1000, 1020; 1100; 1200; 1300, 1310; 1400; 1500; 1600) such that they display different control information for the peripheral devices mounted on the vehicle (300) based on the identified location within the vehicle (300).

14. The method of any one of claims 10 to 13, wherein each of the two or more user terminals (102; 210; 320, 330, 340, 350; 410, 420, 430, 440; 500; 810, 820; 900; 1000, 1020; 1100; 1200; 1300, 1310; 1400; 1500; 1600) is configured to:
generate, on a home screen (511), a shared page (530) for displaying the shared UI (560; 640; 940; 1430) in response to a connection to the electronic device (101; 200; 400; 800).

15. The method of any one of claims 10 to 14, further comprising:
upon receiving an execution command for content information included in a second user terminal among content information included in a screen (540; 620; 920; 1010; 1110; 1410; 1510; 1710) of the shared UI from a first user terminal among the two or more user terminals (102; 210; 320, 330, 340, 350; 410, 420, 430, 440; 500; 810, 820; 900; 1000, 1020; 1100; 1200; 1300, 1310; 1400; 1500; 1600) , transmitting the execution command to the second user terminal; and
receiving content data (925; 1320) of the content information corresponding to the execution command for the content information from the second user terminal.
